# FASCICULE DE BREVET EUROPEEN

(11) **EP 1 071 184 B1**
(45) Date de publication et mention de la délivrance du brevet: **09.12.2009**
(21) Numéro de dépôt: 00402041.8
(22) Date de dépôt: 18.07.2000
(51) Int. Cl.: H02G 3/18

(54) **Griffe d'ancrage à deux zones géographiques d'action distinctes pour mécanisme électrique**
Befestigungsklemmbacken für elektrische Geräte mit zwei unterschiedlichen Wirkungszonen
Anchoring claw for electrical apparatus with two separate acting zones

(30) Priorité: 19.07.1999 FR 9909332
(43) Date de publication de la demande: 24.01.2001
(73) Titulaire: Legrand France, 87000 Limoges (FR); Legrand SNC, 87000 Limoges (FR)
(72) Inventeur: Pauzet, Franck, 87000 Limoges (FR); Daccord, Marcel, 87920 Condat sur Vienne (FR)
(74) Mandataire: Santarelli

(56) Documents cités:
- EP-A- 0 915 537
- FR-A- 2 743 673

## Description

La présente invention a trait aux griffes de mécanismes ou appareils électriques (interrupteurs, commandes d'éclairage, prises de courant, ...) destinés à être installés dans des boîtes d'encastrement et fixés à celles-ci au moyen de ces griffes.

La plupart de ces mécanismes électriques sont munis de griffes d'ancrage disposées latéralement sur les mécanismes à installer dans les boîtes d'encastrement. Des vis de réglage coopérant avec une surface oblique de chacune des griffes permettent de faire basculer ces dernières afin de les amener à pénétrer dans la paroi intérieure des boîtes d'encastrement pour fixer les mécanismes électriques dans les boîtes d'encastrement logées dans un mur ou une cloison. A cet effet, chacune des griffes est pourvue de deux pointes d'ancrage disposées côte à côte.

Le document FR-A-2 743 673 a pour objet un dispositif permettant la dépose rapide de sous-ensembles constitués de griffes et de vis lorsque l'on choisit de fixer un mécanisme électrique dans une boîte d'encastrement au moyen de vis.

Ce type de griffe d'ancrage donne globalement satisfaction.

L'invention vise cependant à en améliorer les capacités de montage.

Ainsi, l'invention propose, de manière générale, une griffe d'ancrage de mécanisme électrique dans une boîte d'encastrement, laquelle griffe comporte deux pointes d'ancrage disposées côte à côte et permettant un ancrage de la griffe dans la paroi d'une boîte d'encastrement destinée à recevoir le mécanisme par ancrage des griffes de ce dernier dans la paroi de la boîte, et est **caractérisée en ce qu**'elle comporte un moyen d'ancrage distinct des deux pointes et comportant une arête rectiligne, située entre celles-ci, et apte à venir en prise avec une colonnette d'une boîte d'encastrement à colonnettes destinées normalement au vissage du support d'un mécanisme électrique sur la boîte d'encastrement à colonnettes.

Grâce à ces dispositions, le mécanisme électrique peut non seulement être installé dans une boîte d'encastrement destinée à recevoir ce mécanisme par ancrage des griffes de celui-ci dans la paroi de la boîte, mais également dans une boîte d'encastrement pourvue de colonnettes destinées normalement au vissage du support du mécanisme électrique sur la boîte d'encastrement.

Dans ce dernier cas, le moyen d'ancrage vient s'ancrer sur une colonnette et les pointes d'ancrages peuvent également pénétrer dans la paroi de la boîte, si la configuration de cette dernière le permet.

Comme on le verra plus en détails ci-après, un tel moyen d'ancrage distinct des pointes d'ancrage peut être mis en oeuvre indifféremment sur une griffe d'origine ou sur une griffe de prolongement de cette griffe d'origine, voire sur une griffe longue venant remplacer une griffe courte d'origine.

Avantageusement également, le moyen d'ancrage comporte une arête rectiligne d'ancrage.

On appréciera qu'une telle arête rectiligne offre une possibilité de récupération d'aplomb.

Dans un mode de réalisation préféré, la griffe d'ancrage comporte deux pattes sensiblement parallèles, solidarisées l'une à l'autre sur l'arrière par un pont et pourvues chacune d'une des pointes d'ancrage sur l'avant, et l'arête rectiligne est formée sur une partie du pont s'étendant vers l'avant de la griffe d'ancrage.

On tire ainsi profit de la matière du pont pour réaliser l'arête d'ancrage.

Selon d'autres dispositions préférées relatives à l'invention :
- l'arête rectiligne est située en retrait par rapport à une ligne d'ancrage définie par les deux pointes d'ancrage ; et/ou
- l'arête rectiligne est située sous les pointes d'ancrage.

L'invention sera mieux comprise à la lecture de la description qui suit, faite en référence aux dessins annexés qui montrent, à titre d'exemple, un mode de réalisation non limitatif de l'invention.

Sur ces dessins :
- la figure 1 montre en perspective, un mécanisme électrique équipé de griffes d'ancrage dans une boîte d'encastrement ;
- la figure 2 est une vue en perspective agrandie d'une griffe de prolongement destinée à être montée sur une griffe d'origine du mécanisme de la figure 1 ;
- la figure 3 est une vue en perspective agrandie du dispositif à pattes élastiques équipant la griffe de prolongement de la figure 2 ;
- la figure 4 est une vue en perspective agrandie de la griffe de prolongement de la figure 2, montée sur une griffe d'origine du type de celle montée sur le mécanisme de la figure 1 ;
- les figures 5a et 5b sont des vues agrandies en élévation latérale illustrant le montage d'une griffe de prolongement sur une griffe d'origine ;
- la figure 6 montre schématiquement l'ancrage d'une griffe de prolongement dans une paroi de boîte d'encastrement ; et
- la figure 7 illustre schématiquement l'ancrage d'une griffe de prolongement sur une colonnette de boîte d'encastrement.

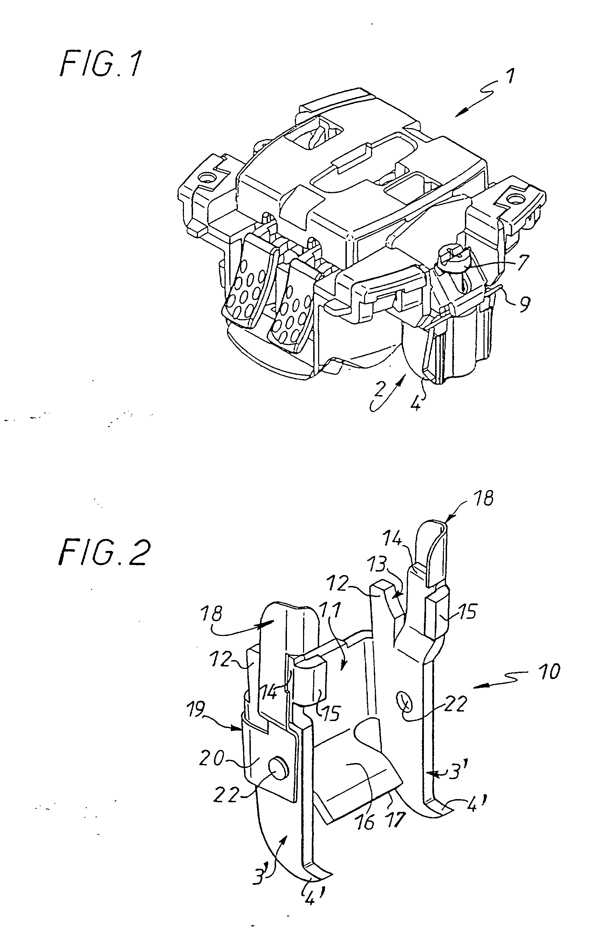

Le mécanisme électrique 1 représenté sur la figure 1 est un interrupteur équipé de deux griffes d'ancrage dans une boîte d'encastrement, dont une seule, désignée par le signe de référence 2, est visible sur cette figure 1.

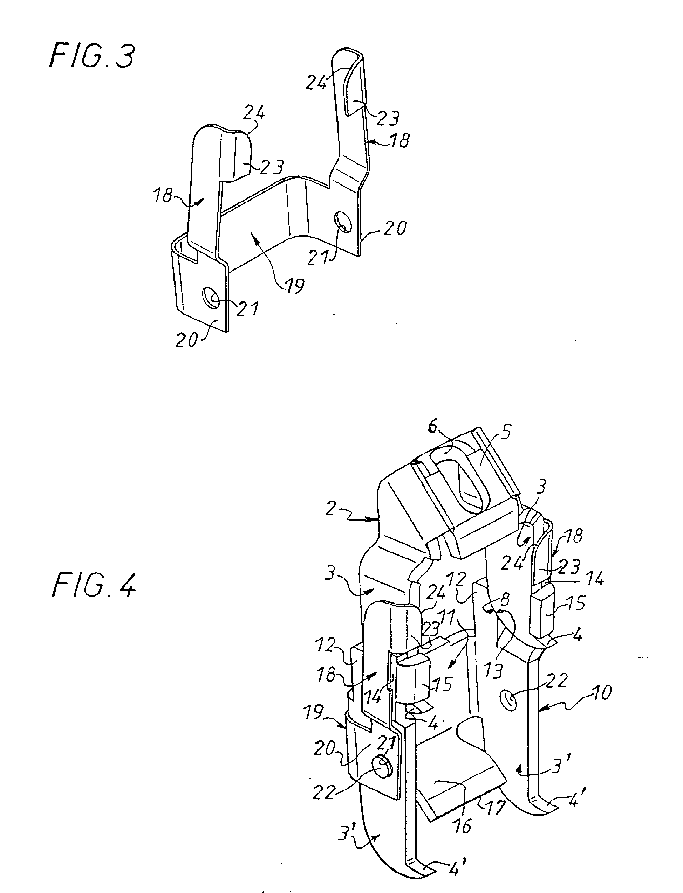

Comme on le voit mieux sur la figure 4, cette griffe 2 comporte deux pattes latérales 3 planes et parallèles, dont chacune est pourvue, à son sommet, d'une pointe d'ancrage 4 formant une petite avancée sensiblement transversale au reste de la patte 3.

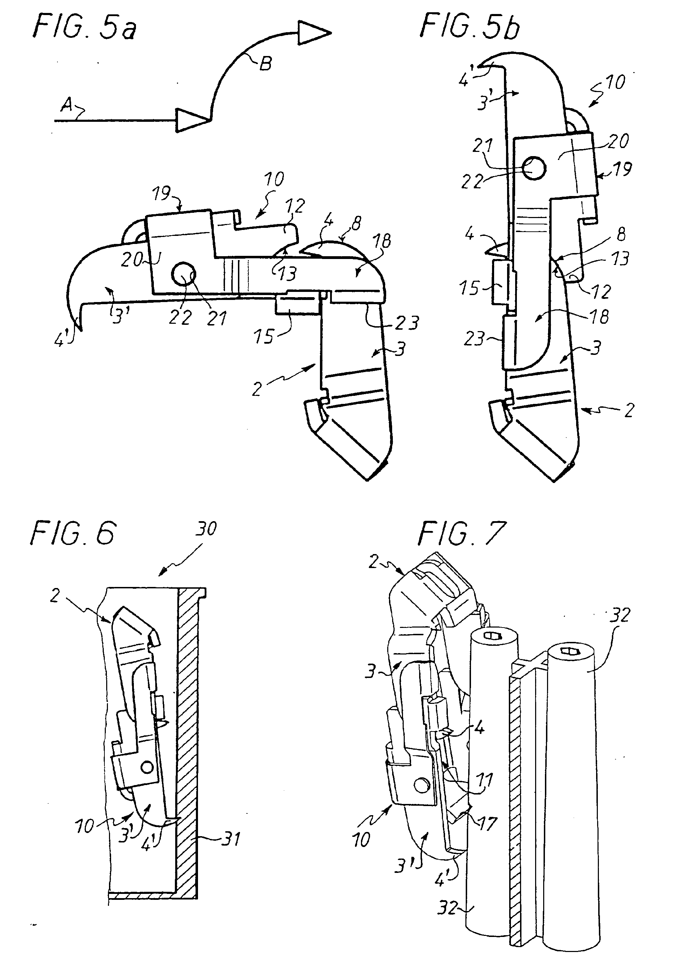

On notera, à cet égard, que sur cette figure 4, le sommet des griffes est dirigé vers le bas, comme d'ailleurs sur les autres figures, excepté les figures 5a et 5b.

Ces pattes 3 sont, par ailleurs, reliées à leur base par une platine inclinée 5 pourvue d'un trou oblong 6 de passage d'une vis d'actionnement 7 (voir figure 1). La tranche arrière de chaque patte 3 s'étendant entre la base de la patte 3 et la pointe d'ancrage 4 forme une surface courbe 8 dans la partie voisine de la pointe d'ancrage 4.

La vis d'actionnement 7, par son effet sur la platine 5, permet de faire basculer vers l'extérieur la griffe 2 afin qu'elle, ou sa griffe de prolongement décrite ci-après, permette l'ancrage du mécanisme électrique 1 dans une boîte d'encastrement.

Au repos, un ressort de rappel 9 maintient la griffe 2 en position rétractée.

Une griffe de prolongement 10 de cette griffe d'origine 2 est représentée sur la figure 2. Comme cette dernière, elle comporte deux pattes latérales 3' planes et parallèles, dont chacune est pourvue, à son sommet, d'une pointe d'ancrage 4' formant une petite avancée sensiblement transversale au reste de la patte 3'.

Ces pattes 3' sont solidarisées l'une à l'autre sur l'arrière par un pont 11.

Par ailleurs, chaque extrémité de patte 3' opposée à l'extrémité pourvue d'une pointe d'ancrage 4' est subdivisée en deux branches.

Une branche arrière 12 est pourvue d'une surface de butée 13 pour une patte 3 de la griffe d'origine 2. A cet effet, cette surface 13 est orientée vers l'avant de la patte 3' et présente une forme courbe destinée à coopérer avec la surface courbe 8 de la patte 3 correspondante de la griffe d'origine 2.

Une branche avant 14 s'étend devant la branche arrière 12. Elle s'écarte tout d'abord du plan de la branche 12, qui est également celui du restant de la patte 3', pour revenir ensuite dans un plan sensiblement parallèle à celui de la branche 12. Elle s'étend ainsi globalement dans un plan sensiblement parallèle à celui de la branche 12.

Cette branche 14 comporte une saillie 15 sensiblement en retour d'équerre et s'étendant en direction de la patte opposée 3'.

Comme cela sera décrit plus en détails ci-après en référence aux figures 5a et 5b, chacune de ces saillies 15 est destinée à s'engager sous une pointe d'ancrage 4 d'une patte 3 de la griffe d'origine 2.

Par ailleurs, conformément à l'invention et comme cela sera également décrit plus en détails ci-après, une partie 16 du pont 11 s'étend vers l'avant et comporte une arête rectiligne d'ancrage 17. Avantageusement, cette arête 17 est tranchante, par la présence d'une bavure de fabrication.

Les pattes 3' et le pont 11 forment un ensemble monobloc et rigide.

Une patte élastique anti-retour 18 prolonge, par ailleurs, longitudinalement chaque patte rigide 3', du côté de son extrémité opposée à l'extrémité pourvue de la pointe d'ancrage 4'.

Ces pattes élastiques 18 sont reliées l'une à l'autre par un étrier 19 (voir figure 3) entourant la griffe de prolongement 10 par l'arrière et fixé, ici de façon amovible, aux pattes rigides 3'.

Plus précisément, chacune des branches latérales 20 de l'étrier 19 comporte un trou 21 engagé sur un téton 22 poinçonné, faisant saillie de la patte rigide 3' adjacente.

L'élasticité de la matière constitutive de l'étrier 19 et des pattes 18 permet d'engager les trous 21 sur les tétons 22.

Les pattes élastiques 18 solidaires des branches latérales 20, suivent sensiblement le profil longitudinal des branches 14 et s'étendent au-delà de l'extrémité libre de ces dernières.

Chacune de ces pattes élastiques 18 comporte également une saillie 23 sensiblement en retour d'équerre.

Cette saillie 23 s'étend sur l'avant de la griffe de prolongement en direction de la patte élastique 18 opposée et à distance de la saillie 15 de la branche 14 de patte rigide adjacente.

Chacune de ces saillies 23 est, par ailleurs, effilée vers l'extrémité libre de la patte élastique 18 correspondante pour former une surface de guidage 24 orientée vers la patte élastique 18 opposée.

Dans le cas du présent mode de réalisation, les surfaces de guidage 24 sont des surfaces courbes à plusieurs rayons.

La mise en place de la griffe de prolongement 10 sur une griffe d'origine 2 est représentée sur les figures 5a et 5b.

Par un mouvement de translation (sens de la flèche A de la figure 5a), l'installateur positionne la griffe de prolongement 10 approximativement perpendiculairement à une griffe d'origine 2 avec des branches arrière 12 très légèrement au-dessus des pointes d'ancrage 4 de la griffe d'origine 2.

Cette mise en position de la griffe de prolongement 10 sur la griffe d'origine 2 est facilitée par les surfaces de guidage 24. En effet, l'effilement des saillies 23 comportant les surfaces de guidage 24 facilite l'écartement et le courbement des pattes élastiques 18.

Après avoir amené les saillies 23 en butée sur les faces latérales des pattes 3 et, par conséquent, courbé les pattes élastiques 18 vers l'extérieur, l'installateur imprime un mouvement de rotation à la griffe de prolongement 10 (sens de la flèche B de la figure 5a). Ce mouvement de rotation est guidé par les surfaces courbes 13 et 8 qui coopèrent l'une avec l'autre.

Ce mouvement de rotation vient, par ailleurs, positionner les saillies 15 sous les pointes d'ancrage 4 de la griffe d'origine 2, tandis que les pattes élastiques 18 reviennent se plaquer contre les pattes 3, amenant les saillies 23 en butée contre l'avant de ces pattes (figure 5b).

Dans cette position finale, la griffe de prolongement 10 est sensiblement dans l'alignement de la griffe d'origine 2 et est parfaitement solidaire de cette dernière.

En effet, les saillies 15 des pattes rigides 3' coopèrent avec les pointes d'ancrage des pattes 3 de la griffe d'origine 2 pour immobiliser la griffe de prolongement 10 en translation sur la griffe d'origine 2.

Par ailleurs, ces mêmes saillies 15 coopèrent avec les pointes d'ancrage 4 et les surfaces de butée 13 en appui sur les surfaces courbes 8 des pattes 3 pour empêcher toute rotation ultérieure de la griffe de prolongement 10 sur la griffe d'origine 2, dans le même sens que celui de la rotation de montage de la griffe de prolongement 10 sur la griffe d'origine 2.

Mais, surtout, les pattes élastiques 18 constituent pour les griffes de prolongement 10 des jambes de force lui fournissant des appuis au-delà de son point de pivotement. Elles s'opposent ainsi à tout mouvement de retour de la griffe de prolongement 10 vers une position non verrouillée, c'est-à-dire à une rotation de cette griffe de prolongement 10 sur la griffe d'origine 2 dans un sens inverse à celui de la rotation ayant permis le montage de la griffe de prolongement 10 sur la griffe d'origine 2.

En d'autres termes, les pattes élastiques 18 et leur étrier 19 constituent un ressort de verrouillage de la griffe de prolongement 10 sur la griffe d'origine 2.

Comme on peut le voir sur la figure 6, une telle griffe de prolongement permet d'installer le mécanisme électrique 1 de la figure 1 (non représenté sur la figure 6 par souci de clarté) dans une boîte d'encastrement logée profondément dans un mur ou une cloison, les pointes d'ancrage 4' venant s'ancrer dans la paroi 31 de la boîte d'encastrement 30.

Grâce à ces dispositions, le mécanisme électrique 1 peut être fixé de manière fiable et aisée dans la boîte montée profondément dans un mur ou une cloison pour des raisons diverses.

De plus, comme on le voit sur la figure 7, cette griffe de prolongement 10 permet également d'installer un mécanisme électrique dans une boîte d'encastrement pourvue de colonnettes 32 destinées normalement au vissage du support du mécanisme électrique sur la boîte d'encastrement.

En effet, dans ce dernier cas, l'arête rectiligne 17 vient s'ancrer sur une colonnette 32, permettant de rendre le mécanisme parfaitement solidaire de la boîte d'encastrement, tout en offrant une possibilité de récupération d'aplomb.

On appréciera également qu'il a été tiré profit de la matière du pont 11 pour former l'arête rectiligne 17 de cette griffe de prolongement 10.

Il est ainsi réalisé une griffe universelle comportant deux niveaux d'ancrage, auxquels correspondent deux zones géographiques d'action distinctes, l'une centrale (arête rectiligne 17) et l'autre latérale (pointes d'ancrage 4').

L'arête rectiligne 17 qui est ici située en retrait par rapport à la ligne d'ancrage définie par les deux pointes d'ancrage 4' et sous ces dernières, peut, dans d'autres modes de réalisation, être positionnée différemment, pour autant qu'elle permette un ancrage de la griffe sur une colonnette de boîte d'encastrement et des pointes d'ancrage 4' sur une boîte d'encastrement dépourvue de colonnette.

Plus généralement, l'arête rectiligne 17 peut être remplacée par tout moyen d'ancrage distinct des deux pointes d'ancrage 4' et situé entre celles-ci.

Par ailleurs, une telle arête rectiligne peut bien évidemment être formée sur une griffe d'origine, sur une griffe longue venant remplacer une griffe courte d'origine, ou encore sur une griffe de prolongement équipée de moyens de fixation à la griffe d'origine différents de ceux décrits supra. De tels moyens de fixation sont, par exemple, décrits dans le document DE-A1-3 603 478.

Bien entendu, l'invention n'est nullement limitée au mode de réalisation décrit et représenté, qui n'a été donné qu'à titre d'exemple.

En particulier, elle comprend tous les moyens constituant des équivalents techniques des moyens décrits, ainsi que leurs combinaisons.

## Revendications

1. Griffe d'ancrage de mécanisme électrique dans une boîte d'encastrement, laquelle griffe (10) comporte deux pointes d'ancrage (4') disposées côte à côte et permettant un ancrage de la griffe dans la paroi d'une boîte d'encastrement destinée à recevoir le mécanisme par ancrage des griffes de ce dernier dans la paroi de la boîte, et est **caractérisée en ce qu'**elle comporte un moyen d'ancrage (17) distinct des deux pointes et comportant une arête rectiligne, située entre celles-ci, et apte à venir en prise avec une colonnette d'une boîte d'encastrement à colonnettes destinées normalement au vissage du support d'un mécanisme électrique sur la boîte d'encastrement à colonnettes.

2. Griffe d'ancrage selon la revendication 1, **caractérisée en ce que** l'arête rectiligne (17) est située en retrait par rapport à une ligne d'ancrage définie par les deux pointes d'ancrage (4').

3. Griffe d'ancrage selon la revendication 2, **caractérisée en ce que** l'arête rectiligne (17) est située sous les pointes d'ancrage (4').

4. Griffe d'ancrage selon la revendication 1, 2 ou 3, **caractérisée en ce qu'**elle comporte deux pattes (3') sensiblement parallèles, solidarisées l'une à l'autre sur l'arrière par un pont (11) et pourvues chacune d'une des pointes d'ancrage (4') sur l'avant, l'arête rectiligne (17) étant formée sur une partie (16) du pont s'étendant vers l'avant de la griffe d'ancrage.

## Claims

1. An anchoring claw for anchoring an electric mechanism in a fixing housing, which claw (10) comprises two anchoring points (4') disposed side-by-side and permitting the claw to be anchored in the wall of a fixing housing intended to receive the mechanism by anchoring of the claws of the latter in the wall of the housing, and **characterised in that** it comprises an anchoring means (17) separate from the two points and comprising a rectilinear edge disposed between the points and capable of coming into engagement with a colonnette of a fixing housing with colonnettes which are normally intended for screwing the support of an electric mechanism to the fixing housing with colonnettes.

2. An anchoring claw according to claim 1 **characterised in that** the rectilinear edge (17) is disposed in set-back relationship with respect to an anchoring line defined by the two anchoring points (4').

3. An anchoring claw according to claim 2 **characterised in that** the rectilinear edge (17) is disposed below the anchoring points (4').

4. An anchoring claw according to claim 1, claim 2 or claim 3 **characterised in that** it comprises two substantially parallel lugs (3') which are secured together at the rear by a bridge (11) and each provided with one of the anchoring points (4') at the front, the rectilinear edge (17) being formed on a part (16) of the bridge extending forwardly of the anchoring claw.

## Patentansprüche

1. Kralle zum Befestigen einer elektrischen Installationsvorrichtung in einer Unterputzdose, wobei die Kralle (10) zwei Befestigungsspitzen (4') umfasst, die nebeneinander angeordnet sind und ein Befestigen der Kralle in der Wand einer Unterputzdose erlauben, welche dazu bestimmt ist, die Installationsvorrichtung durch Befestigen der Krallen der Installationsvorrichtung in der Wand der Dose aufzunehmen, und **dadurch gekennzeichnet ist, dass** sie ein Befestigungsmittel (17) aufweist, das von den beiden Spitzen getrennt ist und eine zwischen diesen angeordnete gerade Kante aufweist, und mit einer Schraubsäule einer Unterputzdose mit Schraubsäulen in Eingriff zu kommen vermag, welche normalerweise zum Festschrauben des Trägers einer elektrischen Installationsvorrichtung auf der Unterputzdose mit Schaubsäulen bestimmt sind.

2. Befestigungskralle nach Anspruch 1,
**dadurch gekennzeichnet, dass** die gerade Kante (17) bezüglich einer durch die beiden Befestigungsspitzen (4') definierten Befestigungslinie zurückspringend angeordnet ist.

3. Befestigungskralle nach Anspruch 2,
**dadurch gekennzeichnet, dass** die gerade Kante (17) unter den Befestigungsspiaen (4') liegt.

4. Befestigungskralle nach Anspruch 1, 2 oder 3,
**dadurch gekennzeichnet, dass** sie zwei im Wesentlichen parallele Arme (3') aufweist, die an der Rückseite durch einen Steg (11) fest miteinander verbunden und an der Vorderseite jeweils mit einer der Befestigungsspitzen (4') versehen sind, wobei die gerade Kante (17) auf einem Teil (16) des Stegs gebildet ist, der sich zur Vorderseite der Befestigungskralle erstreckt.
